## Europäisches Patentamt
## European Patent Office
## Office européen des brevets

(19)

(11) Veröffentlichungsnummer: **0 111 079**
**B1**

(12) **EUROPÄISCHE PATENTSCHRIFT**

(51) Int. Cl.⁴: **C 04 B 35/00**

(45) Veröffentlichungstag der Patentschrift:
27.04.88

(21) Anmeldenummer: **83109892.0**

(22) Anmeldetag: **28.09.83**

(54) Verfahren zum Herstellen spritzgiessfähiger keramischer Massen.

(30) Priorität: **07.12.82  DE 3245184**

(43) Veröffentlichungstag der Anmeldung:
**20.06.84 Patentblatt 84/25**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**EP-A-0 065 702**
**FR-A-2 244 728**
**GB-A-552 776**
**GB-A-1 443 741**
**US-A-2 593 507**
**US-A-2 694 245**

(73) Patentinhaber: **Hutschenreuther AG, D-8672 Selb (DE)**

(72) Erfinder: **Müller- Zell, Axel, Dr., Plössberger Weg 14, D-8672 Selb (DE)**
Erfinder: **Hahn, Christoph, Dr., Bei der Linde 20, D-8672 Selb (DE)**

(74) Vertreter: **Patentanwälte Czowalla . Matschkur + Partner, Dr.- Kurt- Schumacher- Strasse 23 Postfach 9109, D-8500 Nürnberg 11 (DE)**

EP 0 111 079 B1

LIBER, STOCKHOLM 1988

## Beschreibung

Die Erfindung richtet sich auf ein Verfahren zur Herstellung spritzgießfähiger keramischer Massen, bei welchem unplastische, keramische Pulver in einem organischen Lösungsmittel oder Lösungsmittelgemisch vorgelegt werden und dieses Gemisch Wachse, Öle und/oder Kunststoffe enthalten kann.

Der Einsatz keramischer Materialien wie beispielsweise Siliciumcarbid, Siliciumnitrid und Aluminiumoxid gewinnt im anspruchsvollen Maschinenbau, insbesondere im Hochtemperaturbereich, zunehmende Bedeutung. Diese keramischen Werkstoffe sind hierzu durch einige vorzügliche Eigenschaften prädestiniert, wie z. B. ihre hohe Festigkeit, gute Temperaturwechselbeständigkeit, extreme Härte, niedrige Wärmedehnung und gute Beständigkeit gegen Oxidation und Korrosion.

Mit der Anwendung keramischer Werkstoffe stellt sich die Frage ihrer Formgebung, wozu zunächst die klassischen Verfahren, wie z. B. das Schlickergießen, Strangpressen, Trockenpressen oder Heißpressen in Betracht kommen. Diese Verfahren erfordern im allgemeinen nach dem Sintervorgang eine oft aufwendige und kostspielige Nachbearbeitung. Das Schlickergießen und Heißpressen sind darüber hinaus außerordentlich arbeitsintensiv. Man bedient sich deshalb mehr und mehr des Spritzgießverfahrens als Formgebungstechnik keramischer Werkstoffe, da nach dieser Methode die Formteile fast ohne oder nur unter geringfügiger Nachbearbeitung in großen Stückzahlen hergestellt werden können. Selbst die Herstellung komplexer Formkörper ist in rasch wiederholbarem Arbeitsgang möglich.

Bei den heute üblichen Spritzgießmaschinen plastifiziert die umlaufende Schnecke den Werkstoff und fördert ihn gleichzeitig in den Schneckenraum. Beim Spritzhub wird der Werkstoff verdichtet und durch die Düse in den Werkzeughohlraum gespritzt. Nach beendeter Abkühlung wird der Spritzling aus dem geöffneten Werkzeug entformt. Dieser Vorgang kann sich in rascher Folge wiederholen. Die Vorteile des Spritzgießverfahrens zur Formgebung keramischer Werkstoffe lassen sich jedoch nur dann realisieren, wenn geeignete Binde-, Gleit-, und Plastifizierungsmittel zur Verfügung stehen sowie ein Verfahren, um aus diesen Bestandteilen eine spritzgießfähige, homogene Masse mit den notwendigen Fließeigenschaften zu erzeugen. Dabei sollen die verschleißenden Eigenschaften des keramischen Werkstoffs wirksam unterdrückt werden.

In der DE-B-2 256 326 wird ein Spritzgießverfahren zur Herstellung eines Silicium-infiltrierten Formkörpers beschrieben, bei dem von einer Charge folgender Zusammensetzung ausgegangen wird: $\alpha$ - Siliciumcarbid (Teilchengröße $\leqslant$ 37 $\mu$m, kolloidaler Graphit und Bindemittel (in der Zusammensetzung 7,6 Poly-n-Butylmethacrylat, 9,75 Di-n-Butylphthalat, 2,5 Epoxyharz, 0,25 Dicyandiamid). Dieses Gemisch wird in einer Kammer erhitzt, die über eine Düse mit einer Form verbunden ist, in die das Material eingedrückt wird. Der Formkörper wird nun einem Reaktionssinterprozeß mit einer Siliciumatmosphäre bzw. flüssigem Silicium ausgesetzt.

Auch dem Verfahren zur Herstellung eines SiC-Gegenstandes nach der DE-B-2 644 503 liegt als Endprodukt ein siliciuminfiltriertes SiC-Erzeugnis zugrunde. Ausgegangen wird hier von einem Gemisch aus 60 - 80 Gew.-% SiC-Teilchen $\leqslant$ 40 $\mu$m und 40 - 20 Gew.-% eines thermisch härtenden Binders, der Kohlenstoff liefert. Die Formgebung geschieht durch Spritzgießen. Nach der Pyrolyse wird siliziert und reaktionsgesintert. Das Schwergewicht des Verfahrens liegt jedoch auf den Ausbrenn- und Silizierbedingungen.

Die DE-A-2 854 612 offenbart eine spritzgießfähige keramische Masse, die mindestens 65 Gew.-% $\alpha$-Siliciumcarbid, 0,2 - 5,0 Gew.-% eines Sinterhilfsmittels und 14 - 30 Gew.-% eines Gemisches aus thermoplastischem Kunststoff, Öl oder Wachs enthält. Zur Herstellung von Formkörpern aus dieser spritzgießfähigen keramischen Masse wird das Mischen des keramischen Materials in einem beheizten Bandmischer vorgenommen. Die DE-A-2 931 222 erweitert das Verfahren nach DE-A-2 854 612 im wesentlichen dadurch, daß dem spritzgießfähigen sinterbaren keramischen Gemisch eine Titanverbindung zugegeben wird, die die Viskosität erniedrigt. Aus dem vorliegenden Patent-Schrifttum, einschließlich der wenigen Vorveröffentlichungen über das Spritzgießen keramischer Massen, ist über die Aufbereitung von spritzgießfähigen Massen zu entnehmen, daß die keramischen Materialien mit den pulverförmigen oder granulatförmigen Bindermaterialien stets in beheizbaren Mischern (z. B. Bandmischern) oder Knetern verarbeitet werden.

Bedingt durch den möglichst niedrigen Anteil an Gleit- und Plastifizierungsmitteln im Verhältnis zum keramischen Material erweist sich das Mischen in beheizbaren Mischern oder Knetern als nachteilig, da eine gleichmäßige Verteilung, Benetzung oder gar Umhüllung aller keramischer Teilchen nicht möglich ist, was sich nicht nur äußerst nachteilig auf den Spritzgießvorgang selbst, sondern auch auf die Homogenität des Formlings auswirkt. Die daraus resultierenden Nachteile und die Fehler keramischer Bauteile aufgrund mangelnder Homogenität des ungesinterten und gesinterten Formlings sind bekannt.

Spritzgußmassen auf der Basis keramischer Massen oder Sintermetall sind in US-A-2 593 507, 2 694 245, GB-A-1 443 741 sowie EP-A-0 065 702 beschrieben, bei denen Lösungen von Wachsen, Ölen bzw. Kunststoffen zur Herstellung der Massen Verwendung finden. Hiernach kommt auch eine Suspension aus dem keramischen Ausgangsmaterial mit dem gelösten Bindemittel

und einem Gleitmittel in Betracht. Diese weisen jedoch keinen brauchbaren Weg zur Lösung der der Erfindung zugrundeliegenden Aufgabe der Herstellung eines spritzgießfähigen keramischen Masse unter größtmöglicher Minderung des Bindemittelzusatzes und besonders dichter Sinterung, um dadurch Inhomogenitäten des herzustellenden Formkörpers zu unterbinden.

Zur Lösung dieses Problems sieht die Erfindung vor, daß bei einem Verfahren der eingangs bezeichneten Art dem Gemisch ein zweiter Reaktant zugesetzt wird, der mit einem in dem Gemisch vorliegenden ersten Reaktanten eine Lösungspolymerisation bewirkt, wobei mit dem so in situ entstandenen Kunststoff die keramischen Teilchen umhüllt werden.

Es stellt einen entscheidenden Schritt zur Herstellung derartiger spritzgießfähiger Massen dar, wenn es auf die erfindungsgemäße Weise erreicht wird, ein Gleit- und/oder Plastifizierungsmittel in situ zu bilden. Der zweite Reaktant polymerisiert mit dem im Lösungsmittel vorliegenden ersten Reaktanten. Dabei werden die gelösten Bestandteile abgeschieden und umhüllen die suspendierten keramischen Teilchen. Dieser Vorgang führt zu einer optimalen Umhüllung der Teilchen der keramischen Komponente und damit zu höchster Homogenität der spritzgießfähigen Masse. Durch die Zugabe eines weiteren Kunststoffes, der beispielsweise auch ein synthetischer Kautschuk sein kann, läßt sich die Viskosität bestimmter weiterer zuzusetzender Kunststoffe erniedrigen, was wiederum einen positiven Einfluß auf die Plastifizierung und ein ausgezeichnetes Fließen beim Spritzgießvorgang bewirkt.

Es hat sich als besonders zweckmäßig erwiesen, bei dem erfindungsgemäßen Verfahren das Gemisch anschließend unter Vakuum zu trocknen und zu granulieren.

Die der Erfindung zugrundeliegende Aufgabe wurde gelöst für pulverförmiges keramisches Material aus, ggf. synthetischen, Carbiden, Nitriden, Oxiden, vorzugsweise Si-Carbid, Si-Nitrid, Al-Oxid oder Zirkonoxid.

Als Wachse kommen bevorzugt natürliche oder synthetische Wachse in Betracht. Eine besondere Bedeutung erlangt das Merkmal, daß mehrere Wachse verwendet werden können, die unterschiedliche thermische, physikalische und mechanische Eigenschaften aufweisen. Durch eine unterschiedliche Erweichung, verschiedene Verflüchtigungs- bzw. Zersetzungstemperaturen läßt sich ein hohes Maß an Formstabilität und damit Fehlerfreiheit der herzustellenden Formkörper erzielen, und die Wirkungen der verschiedenen Wachse hinsichtlich der Plastifizier-, Gleit- und Antiblockeignung können optimal aufeinander abgestimmt werden.

Das erfindungsgemäße Verfahren verwendet vorzugsweise dünnflüssige Öle, als Kunststoffe Thermoplaste und/oder Duroplaste und/oder Elastomere.

So kann beispielsweise ein drucklos sinterfähiges SiC- bzw. Si-Nitridpulver mit einer spezifischen Oberfläche von 10-15 m$^2$/g und einer Körnung $\leqslant$ 1 μm und den entsprechenden Sinterhilfsmitteln ebenso zur Anwendung kommen, wie z. B. ein Siliciumcarbidpulver mit einer spezifischen Oberfläche von 3-7 m$^2$/g und einer Körnung von $\geqslant$ 5 μm, wie es als handelsübliches Material zur Herstellung von rekristallisiertem Siliciumcarbid zur Verfügung steht. Die Wachse, Öle und Kunststoffe müssen nicht gemeinsam erhitzt werden, wie dies bei Bandmischern oder Knetwerken erforderlich ist. Dadurch können ohne nachteiligen Einfluß auf Homogenisierung und Plastifizierung auch bei längeren Knetzeiten zwischen den einzelnen Komponenten stattfindende chemische Reaktionen verhindert werden, die die Eigenschaften der Ausgangsmaterialien verändern und zu Zersetzungserscheinungen führen können. Auch werden Verflüchtigungserscheinungen vermieden, die die Anteile in den Bindemitteln und Gleitmitteln sowie das Verhältnis von keramischen Pulvern zu Gleitmitteln verändern.

Mit dem beanspruchten Verfahren können spritzgießfähige Massen mit einer Zusammensetzung gemäß Patentanspruch 8 hergestellt werden.

Das erfindungsgemäße Verfahren wird anhand folgender Beispiele näher erläutert:

**Beispiel 1:**

Eine Lösung aus in Xylol gelöstem Styrol mit einem Zusatz von Benzoylperoxid als Katalysator wird nach zweistündigem Erhitzen auf 80° C unter Rühren mit der Suspension vereinigt, in der die gelösten Wachse, Kunststoffe, das Öl und das dispergierte keramische Material vorliegen. Das Polystyrol fällt dabei in feinstverteilter Form aus und umhüllt das keramische Pulver. Dieses Produkt wird im Rotationsverdampfer unter Vakuum getrocknet, wobei sich auch die übrigen, gelösten Stoffe abscheiden. Das sich bildende Granulat ist ohne weitere Verfahrensschritte für eine Formgebung im Wege des Spritzgießverfahrens geeignet, mit dem Ergebnis besonders homogener, fehlerfreier und spannungsfreier Spritzlinge.

**Beispiel 2:**

Ausgegangen wird von getrocknetem luftfreien Petroläther als Lösungsmittel, der in einem mit Rührer, Rückflußkühler, Gaseinleitungsrohr und Tropftrichter versehenen Kolben vorgelegt wird. Bei allen Operationen wird langsam sauerstofffreier Stickstoff durchgeleitet. Es wird nun zerkleinertes Lithium in den Kolben gegeben und unter Rühren ein Teil einer Mischung (Lösung) aus Amylchlorid und Petroläther hinzugetropft. Nach Einsetzen der Reaktion - Lithiumchlorid scheidet aus - wird die restliche Amylchloridlösung innerhalb von 30 min unter Rühren und Kühlen zugetropft. Nach ca. 3 h läßt man das Lithiumchlorid absetzen und trennt es von der Lösung ab. Zu dieser Lösung gibt man unter Stickstoff den das keramische Pulver enthaltenden restlichen Petroläther. Auch können im Äther lösliche Wachse mit zugegeben werden. Nach Zugabe von Titantetrachlorid wird zur Vervollständigung des Katalysators 20 min gerührt. Danach wird nun anstelle des $N_2$ sauerstofffreies Äthylen eingeleitet, welches polymerisiert. Die Reaktion kann durch Zugabe von Butanol gestoppt werden. Das durch das ausgefallene Polyäthylen umhüllte keramische Material wird abfiltriert, gewaschen und getrocknet.

**Beispiel 3:**

Polyesterharze entstehen aus bi- oder trifunktionellen Alkoholen (Glykol, Glycerin) und gesättigten und/oder ungesättigten Dicarbonsäuren (Fumarsäure, Maleinsäure, Adipinsäure, Phthalsäure).

Durch Reaktion z. B. von Äthylenglykol und/oder 1,3-Butylenglykol mit einem Gemisch aus Phthalsäure, Adipinsäure und Maleinsäure wird ein noch in gewissem Sinne thermoplastisches Harz hergestellt. Dieses Harz wird unter Rühren zu einer das keramische Material enthaltenden Styrol-Vorlage, die auch gelöste Wachse enthalten kann, gegeben und gelöst. Durch Zugabe von Peroxidkatalysatoren wie z. B. Benzoylperoxid (in der Kälte) wird das Harz zum Duroplasten vernetzt.

Als Vorlage dient das keramische Material enthaltendes Bis-(p-hydroxyphenyl)-propan ("Bisphenol A") welches mit Phosgen (COC1) - meist in alkalischer Lösung - umgesetzt wird und das Polycarbonat bildet. Es ergeben sich Thermoplaste von relativ großer Härte und guter Eignung zum Spritzgießen.

**Beispiel 4:**

Polyamide entstehen durch Polykondensation aus Diaminen und Dicarbonsäuren.

Durch Umsetzen unter Erhitzen des Gemisches von z. B. 1,6-Diaminohexan mit Adipinsäure, dem das keramische Material untergemischt ist, wird in einer inerten Atmosphäre ein Polyamid erhalten. Anstelle von Adipinsäure kann zur Kondensation auch Sebacinsäure verwendet werden.

**Patentansprüche**

1. Verfahren zur Herstellung spritzgießfähiger keramischer Massen, bei welchem unplastische, keramische Pulver in einem organischen Lösungsmittel oder Lösungsmittelgemisch vorgelegt werden und dieses Gemisch Wachse, Öle und/oder Kunststoffe enthalten kann, dadurch gekennzeichnet, daß dem Gemisch ein zweiter Reaktant zugesetzt wird, der mit einem in dem Gemisch vorliegenden ersten Reaktanten eine Lösungspolymerisation bewirkt, wobei mit dem so in situ entstandenen Kunststoff die keramischen Teilchen umhüllt werden.

2. Verfahren nach Anspruch 1, dadurch gekennzeichnet, daß das fertige Gemisch unter Vakuum getrocknet wird.

3. Verfahren nach einem der Ansprüche 1 bis 2, dadurch gekennzeichnet, daß das pulverförmige keramische Material aus, ggf. synthetischen, Carbiden, Nitriden, Oxiden besteht, vorzugsweise aus Si-Carbid, Si-Nitrid, Al-Oxid oder Zirkonoxid.

4. Verfahren nach einem der Ansprüche 1 bis 3, dadurch gekennzeichnet, daß natürliche und/oder synthetische Wachse verwendet werden.

5. Verfahren nach einem der Ansprüche 1 bis 4, dadurch gekennzeichnet, daß mehrere Wachse verwendet werden, die unterschiedliche thermische, physikalische und mechanische Eigenschaften aufweisen.

6. Verfahren nach einem der Ansprüche 1 bis 4, dadurch gekennzeichnet, daß vorzugsweise dünnflüssige Öle verwendet werden.

7. Verfahren nach einem der Ansprüche 1 bis 6, dadurch gekennzeichnet, daß als Kunststoffe Thermoplaste und/oder Duroplaste und/oder Elastomere verwendet werden.

8. Spritzgießfähige Masse, hergestellt nach dem Verfahren nach den Ansprüchen 1 bis 7, gekennzeichnet durch einen Anteil von 50 - 95 Gew.-% keramisches Material und 50 - 5 Gew.-% aus einem Gemisch aus Kunststoff, Wachs und Öl.

**Claims**

1. Process for the preparation of injection-mouldable ceramic compositions, in which non-plastic, ceramic powders are taken in an organic solvent or solvent mixture and this mixture can contain waxes, oils and/or plastics, characterised in that a second reactant which effects solution polymerisation with a first reactant present in the mixture is added to the mixture, the ceramic particles being coatad with the plastic thus formed in situ.

2. Process according to claim 1, characterised in that the finished mixture is dried under a vacuum.

3. Process according to one of claims 1 or 2, characterised in that the pulverulent ceramic material consists of, if appropriate synthetic,

4

carbides, nitrides or oxides, preferably of Si carbide, Si nitride, Al oxide or zirconium oxide.

4. Process according to one of claims 1 to 3, characterised in that natural and/or syntnetic waxes are used.

5. Process according to one of claims 1 to 4, characterised in that several waxes which have different thermal, physical and mechanical properties are used.

6. Process according to one of claims 1 to 4, characterised in that low-viscosity oils are preferably used.

7. Process according to one of claims 1 to 6, characterised in that thermoplastics and/or thermosets and/or elastomers are used as the plastics.

8. Injection-mouldable composition prepared by the procees according to claims 1 to 7, characterised in that it contains 50 - 95 wt.-% of ceramic material and 50 - 5 wt.-% of a mixture of plastic, wax and oil.

**Revendications**

1. Procédé de préparation de compositions céramiques convenant au moulage par injection, dans lequel on met en présence des poudres céramiques non-plastiques et un solvant organique ou un mélange de solvants, ce mélange pouvant contenir des cires, des huiles et/ou des matières plastiques, caractérisé en ce qu'on ajoute au mélange un deuxième réactif, lequel, avec un premier réactif se trouvant dans le mélange, déclenche une polymérisation en solution, les particules céramiques étant alors enrobées de la matière plastique ainsi formée in situ.

2. Procédé selon la revendication 1, caractérisé en ce que le mélange fini est séché sous vide.

3. Procédé selon l'une des revendications 1 ou 2, caractérisé en ce que le matériau céramique en poudre est constitué de carbures, nitrures, oxydes éventuellement synthétiques, de préférence de carbure de Si, de nitrure de Si, d'oxyde de Al ou d'oxyde de zirconium.

4. Procédé selon l'une des revendications 1 à 3, caractérisé en ce qu'on utilise des cires naturelles et/ou synthétiques.

5. Procédé selon l'une des revendications 1 à 4, caractérisé en ce qu'on utilise plusieurs cires, qui présentent des propriétés thermiques, physiques et mécaniques différentes.

6. Procédé selon l'une des revendications 1 à 4, caractérisé en ce qu'on utilise de préférence des huiles de faible viscosité.

7. Procédé selon l'une des revendications 1 à 6, caractérisé en ce qu'on utilise comme matières plastiques des thermoplastiques et/ou des thermodurcissables et/ou des élastomères.

8. Composition convenant au moulage par injection, préparée par le procédé selon les revendications 1 à 7, caractérisée en ce qu'elle contient de 50-95 % en poids de matériau céramique et de 50-5 % en poids d'un mélange de matière plastique, de cire et d'huile.